Europäisches Patentamt

**European Patent Office**

Office européen des brevets

(11) Publication number: **0 011 922**
**B1**

(12) **EUROPEAN PATENT SPECIFICATION**

(45) Date of publication of patent specification: **19.01.83**

(51) Int. Cl.³: **B 01 D 3/22, C 07 C 7/04**

(21) Application number: **79302242.7**

(22) Date of filing: **17.10.79**

(54) Distillation sieve tray.

(30) Priority: **17.10.78 GB 4088978**

(43) Date of publication of application:
**11.06.80 Bulletin 80/12**

(45) Publication of the grant of the patent:
**19.01.83 Bulletin 83/3**

(84) Designated Contracting States:
**DE FR GB IT**

(56) References cited:
**DE - C - 1 032 219**
**GB - A - 1 035 372**
**GB - A - 1 449 278**

(73) Proprietor: **The British Petroleum Company p.l.c.**
**Britannic House Moor Lane**
**London EC2Y 9BU (GB)**

(72) Inventor: **Day, Herbert Anthony**
**Britannic House Moor Lane**
**London, EC2Y 9BU (GB)**

(74) Representative: **MacLeod, Malcolm et al,**
**BP INTERNATIONAL LIMITED Patents and**
**Licensing Division Chertsey Road**
**Sunbury-on-Thames Middlesex, TW16 7LN (GB)**

Courier Press, Leamington Spa, England

Distillation sieve tray

This invention relates to mass transfer equipment. Distillation, absorption and extraction are mass transfer operations widely used in the oil refining, chemical and petrochemical industries. The equipment used to enable this mass transfer to take place is a column or tower. In the column, liquids and vapours contact each other and components from one phase can be transferred to the other. The amount of interphase diffusion of the components is increased when the contacting surface area is increased, i.e., the more intimate the phase contact, the higher the mass transfer efficiency.

Columns may be classified under two broad headings — packed and plate-type. Packed columns generally use meshes or rings whereas plate-type columns utilise plates or trays, spaced apart by a predetermined distance, which serve as the phase contacting area. The trays carry the phase contacting devices of which there are three main types, with many variants of each.

Bubble caps and sieves have traditionally been used as vapour/liquid contactors. The bubble cap consists of a riser which acts as a liquid seal and through which the vapour rises. The vapour then proceeds through a reverse path and is dispersed into the liquid via slots in the cap. With a sieve tray, liquid is maintained on the tray surface by the kinetic energy of the vapour. Bubble caps have a limited efficiency and also they are expensive to manufacture. Sieves are largely used because of their simplicity in both manufacture and maintenance.

An alternative to bubble caps and sieves is the valve tray. The vapour pressure drop across the tray is of importance in tray design and in vacuum distillation particularly it should be as low as possible.

We have now designed a novel sieve tray which is more efficient in operation than those of the prior art.

Thus according to the present invention there is provided a sieve tray comprising one or more apertures which are star shaped in plan and which are formed by cutting a series of lines meeting at a point in a plate and bending the resulting segments to form a number of V-notches.

The fabrication of the apertures is facilitated if a central hole is provided before the segments are bent. This results in the provision of truncated segments.

Preferably the meeting lines are equidistant radii of a circle. Most preferably the number of radii is in the range 3 to 8.

Suitably the segments are bent to an angle up to 45° from the vertical, most preferably 30°.

The invention is illustrated with reference to Figures 1—3 of the accompanying drawings wherein Figure 1 is a plan of a plate showing the lines along which the metal will part during a forming operation, Figure 2 is an elevation of the plate after forming and Figure 3 is a plan of the plate after forming.

Eight radial cuts (1) are made in a plate (2) forming eight segments (3). The segments are then bent up to an angle of 30° to the vertical to form eight V-notches (4).

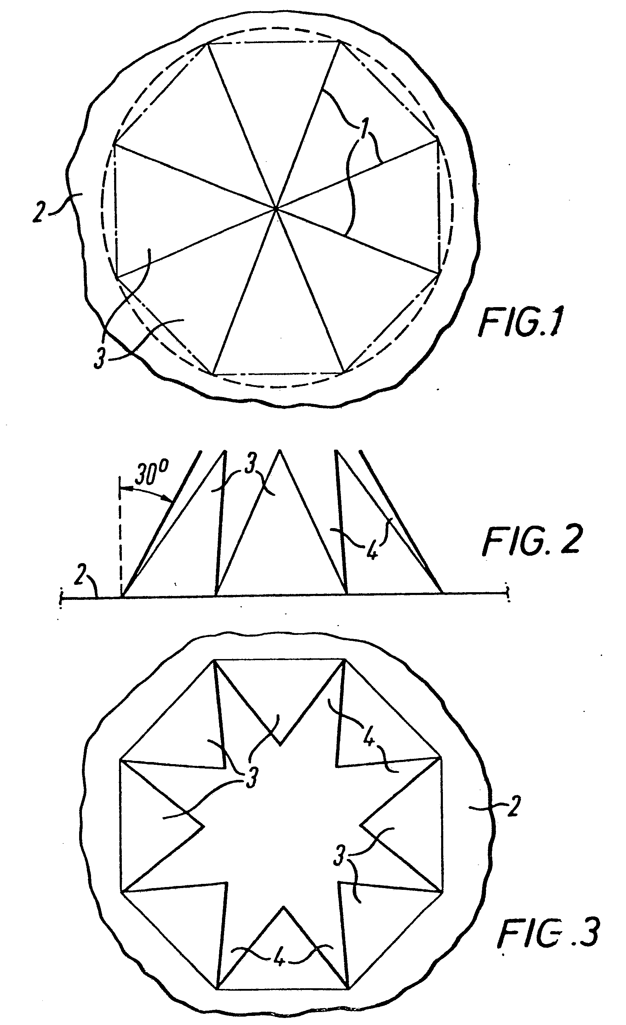

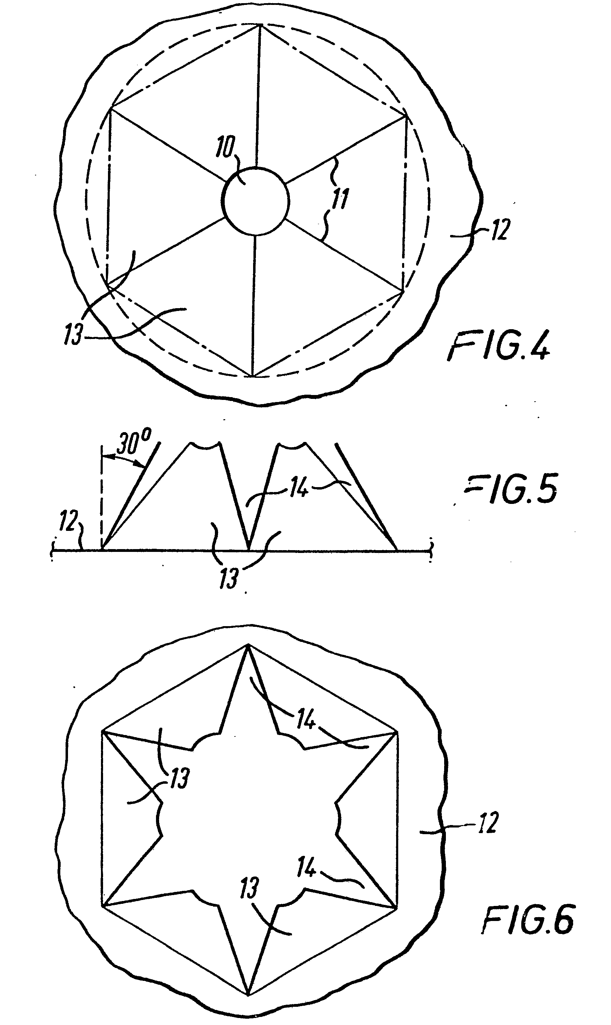

The invention is further illustrated with reference to Figures 4—6 of the accompanying drawings which represent a modification in which the segments of the aperture are truncated. Figures 4—6 correspond to Figures 1—3.

A press tool forming the apertures first punches a central hole 10 which assists the parting of the metal along the six lines 11 cut in the plate 12 by the remainder of the tool to form six truncated segments 13. The tool then bends the segments to an angle of 30° to the vertical to form six V-notches 14.

The notches at the circumference of the perforated holes and the bases of the turned up sections form a barrier against liquid. The tray possesses the desirable properties of low vapour pressure drop, high efficiency and high capacity to accept liquid and vapour loads. It is cheaply and easily fabricated and has no moving parts which are likely to wear out. The weeping tendency of trays according to the present invention is less than that of conventional sieve trays.

Normally the segments defining the aperture will project above the tray.

However, in the case of very low vapour loads, and at the expense of a slightly higher pressure drop, the position may be reversed so that the segments project below the tray.

In this mode, tray weeping is reduced even further because of higher vapour turbulence.

The most common size of aperture is a base circle diameter of 16 mm based on a centre hole of 3 mm diameter, but apertures of other sizes may be used for different applications. Apertures of 25 mm base circle diameter may be used in circumstances when clogging of smaller holes by particulate matter is to be avoided.

**Claims**

1. A sieve tray characterised by the fact that it contains one or more apertures which are star shaped in plan and which are formed by cutting a series of lines (1, 11) meeting a point in a plate (2, 12) and bending the resulting segments (3, 13) to form a number of V-notches (4, 14).

2. A sieve tray according to claim 1 characterised by the fact that the segments are truncated by virtue of a central hole (10) formed prior to bending.

3. A sieve tray according to either of the preceding claims characterised by the fact that the meeting lines (1, 11) are equidistant radii of a circle.

4. A sieve tray according to claim 3 characterised by the fact that the number of radii (1, 11) is in the range 3 to 8.

5. A sieve tray according to any of the preceding claims characterised by the fact that the segments (3, 13) are bent to an angle up to 45° from the vertical.

6. A sieve tray according to claim 5 characterised by the fact the segments (3, 13) are bent to an angle of 30° from the vertical.

## Patentansprüche

1. Ein Siebboden, dadurch gekennzeichnet, daß er eine oder mehrere Öffnungen enthält, die in der Draufsicht sternförmig sind und gebildet werden, indem eine Reihe von Linien (1, 11), die sich an einem Punkt in einem Blech (2, 12) treffen, geschnitten und die hierbei gebildeten Ausschnitte (3, 13) unter Bildung einer Anzahl von V-förmigen Einschnitten (4, 14) gebogen werden.

2. Siebboden nach Anspruch 1, dadurch gekennzeichnet, daß die Ausschnitte auf Grund eines vor dem Biegen gebildeten zentralen Lochs (10) kegelstumpfförmig sind.

3. Siebboden nach einem der vorstehenden Ansprüche, dadurch gekennzeichnet, daß die sich treffenden Linien (1, 11) abstandsgleiche Radii eines Kreises sind.

4. Siebboden nach Anspruch 3, dadurch gekennzeichnet, daß die Zahl der Radii (1, 11) im Bereich von 3 bis 8 liegt.

5. Siebboden nach irgendeinem der vorstehenden Ansprüche, dadurch gekennzeichnet, daß die Ausschnitte (3, 13) in einem Winkel bis zu 45° zur Senkrechten gebogen sind.

6. Siebboden nach Anspruch 5, dadurch gekennzeichnet, daß die Ausschnitte (3, 13) in einem Winkel von 30° zur Senkrechten gebogen sind.

## Revendications

1. Plateau de tamisage, caractérisé par le fait qu'il contient une ou plusieurs ouvertures qui sont en forme d'étoile quand on les observe en plan et qui sont formées en coupant une série de lignes (1, 11) qui se rencontrent en un point du plateau (2, 12) et ensuite en cintrant les segments résultants (3, 13) pour obtenir un certain nombre d'encoches en V (4, 14).

2. Plateau de tamisage selon la revendication 1, caractérisé par le fait que les segments sont tronqués en raison de la formation d'un trou central (10) avant le cintrage.

3. Plateau de tamisage selon l'une des revendications précédentes, caractérisé par le fait que les lignes qui se rencontrent (1, 11) sont des rayons équidistants d'un cercle.

4. Plateau de tamisage selon la revendication 3, caractérisé par le fait que le nombre de rayons (1, 11) est compris entre 3 et 8.

5. Plateau de tamisage selon l'une des revendications précédentes, caractérisé par le fait que les segments (3, 13) sont cintrés suivant un angle pouvant atteindre 45° par rapport à la verticale.

6. Plateau de tamisage selon la revendication 5, caractérisé par le fait que les segments (3, 13) sont cintrés d'un angle de 30° à partir de la verticale.

FIG.1

FIG. 2

FIG .3

FIG.4

FIG.5

FIG.6